# EUROPÄISCHE PATENTSCHRIFT

(11) **EP 3 434 931 B1**
(45) Veröffentlichungstag und Bekanntmachung des Hinweises auf die Patenterteilung: **26.02.2020**
(21) Anmeldenummer: 18180287.7
(22) Anmeldetag: 28.06.2018
(51) Int. Cl.: F16F 15/22, F16F 15/28

(54) **KURBELWELLE MIT MOMENTENAUSGLEICH**
CRANKSHAFT WITH TORQUE COMPENSATION
VILEBREQUIN À COMPENSATION DE MOMENT DE ROTATION

(30) Priorität: 24.07.2017 DE 102017212621
(43) Veröffentlichungstag der Anmeldung: 30.01.2019
(73) Patentinhaber: Bayerische Motoren Werke Aktiengesellschaft, 80809 München (DE)
(72) Erfinder: Dong-Dietsche, Bidan, 81375 München (DE); Dr.Gutzer, Ulrich, 80937 Muenchen (DE)

(56) Entgegenhaltungen:
- GB-A- 701 235
- KR-B1- 101 755 496
- US-A- 2 632 340
- US-A- 2 817 980
- US-A- 5 860 402

## Beschreibung

Die Erfindung betrifft eine Kurbelwelle für einen Verbrennungsmotor eines Kraftfahrzeugs, einen Kurbeltrieb mit einer solchen Kurbelwelle sowie einen Verbrennungsmotor mit einem solchen Kurbeltrieb.

Insbesondere bei V8-Motoren mit einer Kreuzwelle (also mit einer in Crossplane-Bauweise ausgebildeten Kurbelwelle), aber beispielsweise auch bei V10-Motoren und bei anderen Motor-Bauarten sind im Betrieb insbesondere die Massenkräfte erster Ordnung, die hauptsächlich aus den bewegten Massen der Kolben und der Pleuelstangen resultieren, nicht vollständig ausgeglichen.

Bei einem V8-Motor zeigt sich beispielsweise der fehlende Ausgleich darin, dass sich der erste und der letzte Kolben jeder Zylinderbank im Betrieb zu den meisten Zeitpunkten bezüglich der Hochrichtung nicht in derselben Position befinden, ebenso wie die dazwischen angeordneten Kolben. Bemerkbar macht sich dies insbesondere, wenn zu einem Zeitpunkt am einen Ende der Zylinderbank mehr Massenimpuls nach oben und am anderen Ende der Zylinderbank mehr Massenimpuls nach unten erzeugt wird. In dieser Situation entsteht bei einem nicht ausgeglichenen Motor ein Drehmoment um die Querachse der Zylinderbank, das über die Zeit veränderlich ist. Die Fahrzeuginsassen bemerken dies unter anderem als Vibration.

Die beschriebene Unwucht wird bei verschiedenen bekannten Kurbelwellen durch geeignet dimensionierte und positionierte Gegengewichte an den Wangen der Kröpfungen der Kurbelwelle ausgeglichen, die sich auf einer Seite der Mittenlängsachse der Kurbelwelle erstrecken, welche dem zugehörigen Hubzapfen gegenüberliegt.

Allerdings bleibt bei begrenztem Zylinderabstand nur wenig Bauraum für die Wangen und die Gegengewichte. Der Momentenausgleich erfordert daher breitere Gegengewichte, die außerhalb der äußeren Kröpfungen angebracht werden. Wegen der breiteren Gegengewichte zwischen jeder der äußeren Kröpfungen und dem zugeordneten äußeren Grundlager ist ein größerer längsaxialer Bauraum erforderlich. Dies erhöht den Abstand der äußeren Grundlager zu dem jeweils benachbarten inneren Grundlager. Aufgrund des größeren Abstandes sind dann diese inneren Grundlager deutlich höher belastet als die anderen Grundlager, was unter anderem zu einem höheren Verschleiß führt.

Aus der US 2 632 340 A sind ein V6-Motor sowie eine Kurbelzapfen-Anordnung und Auswuchtmittel für einen V6-Motor in 60°-Anordnung bekannt.

Andere Lösungen wie das Vorsehen aufwändigerer Lagerkonstruktionen bei den höher belasteten Grundlagern oder das Vorsehen eines gleichmäßig größeren Abstands der Grundlager voneinander sind aus Kostengründen und/oder Bauraumgründen ebenfalls nicht wünschenswert.

Es ist daher eine Aufgabe der Erfindung, eine Kurbelwelle bzw. einen Verbrennungsmotor bereitzustellen, die eine hohe Motorlaufruhe auch bei einem kleinen, insbesondere längsaxialen, Bauraum des Motors ermöglicht.

Diese Aufgabe wird gelöst durch eine Kurbelwelle mit den Merkmalen von Anspruch 1, einen Kurbeltrieb gemäß Anspruch 9 sowie durch einen Verbrennungsmotor mit den Merkmalen von Anspruch 10. Vorteilhafte Ausbildungen der verschiedenen Aspekte der Erfindung sind Gegenstand der Unteransprüche.

Gemäß einem Aspekt der Erfindung wird eine Kurbelwelle für einen Verbrennungsmotor eines Kraftfahrzeugs, insbesondere für einen V8-Motor oder einen V10-Motor bereitgestellt, welche eine Mittellängsachse, entlang der sich die Kurbelwelle insbesondere zwischen einem Steuerabtrieb und einem steuerabtriebsfernen Wellenabschluss erstreckt, welcher insbesondere einen Antriebsabtrieb zur Anbindung des Antriebsstrangs, aufweist.

Die Kurbelwelle weist mehrere Kröpfungen zur Aufnahme jeweils wenigstens einer Pleuelstange sowie mehrere Grundlagerungsabschnitte zum Lagern der Kurbelwelle am Motorgehäuse auf, wobei auf beiden längsaxialen Seiten jeder Kröpfung ein Grundlagerungsabschnitt angeordnet ist, sodass zwei äußere Grundlagerungsabschnitte und wenigstens ein innerer Grundlagerungsabschnitt vorgesehen sind, die insbesondere entlang der Mittellängsachse beabstandet voneinander angeordnet sind. An wenigstens einem Teil der Kröpfungen, insbesondere wenigstens an einer der äußeren Kröpfungen oder an allen Kröpfungen, ist jeweils ein Gegengewicht zum Ausgleich von Momenten aus dem Betrieb des Verbrennungsmotors angeordnet.

Zudem ist längsaxial zwischen dem Steuerabtrieb und dem steuerabtriebsnahen, insbesondere benachbarten, äußeren Grundlagerungsabschnitt, insbesondere auf einer den Kröpfungen abgewandten längsaxialen Seite, ein kröpfungsfernes Gegengewicht angeordnet.

Zwischen dem steuerabtriebsfernen Grundlagerungsabschnitt und dem steuerabtriebsfernen Wellenabschluss ist die Kurbelwelle mit einem Schwerpunkt ausgebildet, der zumindest im Wesentlichen an, insbesondere im Verlauf, der Mittellängsachse angeordnet ist.

Gemäß einem weiteren Aspekt der Erfindung wird ein Kurbeltrieb bereitgestellt, aufweisend eine Kurbelwelle gemäß dem zuvor beschriebenen Aspekt der Erfindung und ein, insbesondere an dem Steuerabtrieb angeordnetes und mit diesem kämmendes, Endloszugmittel, insbesondere einen Kettentrieb oder einen Riementrieb.

Gemäß einem weiteren Aspekt der Erfindung wird ein Verbrennungsmotor für ein Kraftfahrzeug bereitgestellt, aufweisend einen Kurbeltrieb gemäß dem zuvor beschriebenen Aspekt der Erfindung sowie eine der Anzahl der Grundlagerungsabschnitte entsprechende Anzahl von Grundlagern, mittels welchen die Kurbelwelle des Kurbeltriebs an einem Motorgehäuse, gegebenenfalls mittelbar, gelagert ist.

Die Erfindung basiert unter anderem auf der Erkenntnis, dass bei gegenwärtig verwendeten V8-Motoren mit einem Momentenausgleich die Gegengewichte nur dann in ausreichender Masse verbaut werden können, wenn eine Kurbelwelle mit unterschiedlichen Abständen zwischen den Grundlagerungsabschnitten verwendet wird.

Es ist häufig nötig, jeweils zwischen dem äußeren Grundlager und dem benachbarten inneren Grundlager einen größeren Abstand vorzusehen als zwischen den inneren Grundlagern, um bezüglich der Längsachse der Kurbelwelle ausreichend Platz für groß genug dimensionierte Gegengewichte zu schaffen, die die gewünschte Laufruhe des Motors sicherstellen können. Durch diesen vergrößerten Abstand sind im Ergebnis die zu den äußeren Grundlagern benachbarten inneren Grundlager deutlich stärkeren Momenten- und Kraftbelastungen ausgesetzt sind als die anderen Lager.

Der Erfindung liegt nun unter anderem die Idee zugrunde, die äußeren Gegengewichte (insbesondere zwischen einem äußeren und dem benachbarten inneren Grundlager) so auszubilden, dass dafür ein nur geringfügig oder gar nicht vergrößerter Lagerabstand zwischen dem äußeren Grundlagerungsabschnitt und dem dazu benachbarten inneren Grundlagerungsabschnitt erforderlich ist. Dazu ist vorzugsweise vorgesehen, zumindest einen Teil des Gegengewichts von einer äußeren Kröpfung bezüglich der Längsachse nach jenseits des äußeren Grundlagers, also auf dessen kröpfungsferner Seite, zu verlagern.

Bei vielen in aktuellen Kraftfahrzeugen verwendeten Motoren kann dazu im Sinne der Erfindung ein längsaxialer Bauraum verwendet werden, der bauartbedingt zwischen dem steuerabtriebsseitigen äußeren Grundlager und dem Steuerabtrieb verbleibt. Beispielsweise werden häufig, insbesondere bei V-Motoren, Zylinderköpfe eingesetzt, deren geometrische Dimensionierung einen Kettentrieb erfordert, dessen längsaxiale Position von dem steuerabtriebsseitigen äußeren Grundlager beabstandet ist. Der Zylinderkopf benötigt diesen längsaxialen Bauraum beispielsweise, um Platz für Hydraulikkomponenten zum Betrieb der Phasensteller bereitzustellen. Dieser Bauraum kann dann am der Kurbelwelle zur Anordnung eines kröpfungsfernen Gegengewichts verwendet werden.

Weil der Momentenausgleich - insbesondere bei den hier relevanten, durch die Hebe- und Senkbewegung der Kolben und der Pleuel verursachten Drehmomenten - unabhängig von der längsaxialen Position erfolgen kann, ist es nicht nötig, an beiden Wellenabschlüssen "außerhalb" des jeweiligen äußeren Grundlagers ein kröpfungsfernes Gegengewicht vorzusehen; vorausgesetzt die Verteilung, Gestaltung und/oder Bemessung der Gegengewichte in an sich bekannter Art und Weise wird fachgerecht ermittelt.

Vielmehr reichen dann ein oder mehrere kröpfungsferne Gegengewichte an dem steuerabtriebsseitigen Wellenabschluss aus. Dies kann beispielsweise im ohnehin vorhandenen axialen Bauraum zwischen dem Steuerabtrieb und dem benachbarten äußeren Grundlager angeordnet sein.

Die Erfindung nutzt dabei die Eigenschaft der räumlichen Verschiebbarkeit des freien Massenmoments zur vorteilhaften geometrischen Gestaltung des Kurbelwellenanfangs oder -endes, je nach Bedarf, aus.

Zur Anpassung an unterschiedliche Motorgrößen und -bauformen sind gemäß unterschiedlichen Ausführungen zwei oder drei, vorzugsweise vier (für einen V8-Motor) oder fünf (für einen V10-Motor) Kröpfungen mit jeweils wenigstens einem, gegebenenfalls jeweils zwei Hubzapfen zur Aufnahme, insbesondere zur Lagerung, jeweils wenigstens einer, bei einem V8- oder einen V10-Motor insbesondere zweier, Pleuelstangen, vorgesehen.

Die Anzahl der Grundlagerungsabschnitte richtet sich gemäß einer Ausführung nach der Anzahl der Kröpfungen der Kurbelwelle; insbesondere ist die Anzahl der Grundlagerungsabschnitte um eins größer als die Anzahl der Kröpfungen.

Vorzugsweise sind die Grundlagerungsabschnitte entlang einer Längsachse der Kurbelwelle beabstandet voneinander angeordnet. Gemäß unterschiedlicher Ausführungen sind die Grundlagerungsabschnitte unmittelbar oder mittelbar über andere Bauteile des Motors am Motorgehäuse, insbesondere mittels jeweils eines Grundlagers, gelagert.

Gemäß einer bevorzugten Ausführung ist auf beiden längsaxialen Seiten jeder Kröpfung einer der Grundlagerungsabschnitte angeordnet, sodass zwei äußere, insbesondere jeweils nur zu einer der Kröpfungen benachbarte, Grundlagerungsabschnitte und zwei oder drei oder vier innere, insbesondere jeweils zu zwei Kröpfungen benachbarte, Grundlagerungsabschnitte vorgesehen. Bei einem V8-Motor, dessen Kurbelwelle im Normalfall vier Kröpfungen aufweist, sind dementsprechend beispielsweise drei innere Grundlagerungsabschnitte und zwei äußere Grundlagerungsabschnitte vorgesehen.

Um die Erfindung auf eine typische Bauform von Kurbelwellen anwenden zu können, ist gemäß einer Ausführung bei der Kurbelwelle jeder der Hubzapfen beiderseits seiner längsaxialen Erstreckung mittels jeweils einer Wange mit dem längsaxial angrenzenden Grundlagerabschnitt verbunden. Bei dieser Ausführung ist an einer oder beiden Wangen jeder Kröpfung jeweils ein Gegengewicht zum Ausgleich von Drehmomenten aus dem Betrieb des Verbrennungsmotors, insbesondere aus der Bewegung der Kolben und der Pleuelstangen, angeordnet, insbesondere daran angesetzt oder damit verbunden.

Gemäß einer typischen Ausführung, insbesondere bei einem Längseinbau des Verbrennungsmotors, ist der Steuerabtrieb auf der einen Seite und der Antriebsabtrieb an der anderen Seite der Kröpfungen angeordnet. Selbstverständlich kann gemäß einer anderen Ausführung der Antriebsabtrieb auch auf der Seite des Steuerabtriebs angeordnet sein.

Um eine längsaxial kürzere Bauform der Kurbelwelle zu ermöglichen, ist gemäß einer Ausführung zwischen dem steuerabtriebsfernen Wellenabschluss und dem steuerabtriebsfernen Grundlagerungsabschnitt kein kröpfungsfernes Gegengewicht angeordnet ist. Insbesondere kann die Funktion der Unwuchtvermeidung in ausreichendem Umfang von dem steuerabtriebsseitigen kröpfungsfernen Gegengewicht übernommen werden, indem dessen Verbau einen wenigstens annähernd gleichen Abstand zwischen den einzelnen Grundlagern ermöglicht.

Unter einem annähernd gleichen Abstand wird vorliegend insbesondere auch verstanden, dass gegenüber einer ohne kröpfungsfernes Gegengewicht für den gleichen Anwendungsfall konstruierten Kurbelwelle für einen ansonsten vergleichbaren Motor ein gleichmäßigerer Lagerabstand erreicht werden kann, ohne dass im Betrieb eine Unwucht auftritt, die das gewünschte Maß überschreitet. Vorzugsweise ist der gleichmäßigere oder gleichmäßige Lagerabstand so bemessen, dass im Vergleich mit einer für den gleichen Anwendungsfall konstruierten Kurbelwelle mit beiderseitigem kröpfungsfernen Gegengewicht oder keinem kröpfungsfernen Gegengewicht, in längsaxialer Richtung eine kürzere Bauform des Verbrennungsmotors erreicht werden kann.

Für den Fall, dass der Antriebsabtrieb auf der gleichen Seite wie der Steuerabtrieb vorgesehen sein soll, können gemäß einer Ausführung der steuerabtriebsferne Wellenabschluss und der steuerabtriebsferne, äußere Grundlagerungsabschnitt zumindest im Wesentlichen gemeinsam ausgebildet sein.

Um eine möglichst gleichmäßige Beabstandung der Grundlager, insbesondere jeweils des äußeren und des benachbarten inneren Grundlagers erreichen zu können, weisen gemäß einer Ausführung ein steuerabtriebsnäheres Gegengewicht, insbesondere an, der steuerabtriebsnahen Kröpfung und ein steuerabtriebsfernes Gegengewicht, insbesondere an, der steuerabtriebsfernen Kröpfung zumindest im Wesentlichen die gleiche längsaxiale Erstreckung auf.

Vorzugsweise weisen alle zwischen den beiden äußeren Grundlagerungsabschnitten angeordneten Gegengewichte zumindest im Wesentlichen die gleiche längsaxiale Erstreckung auf, um eine vollständig gleichmäßige Beabstandung der Grundlagen und voneinander erreichen zu können.

Gemäß einer Ausführung weisen alle, insbesondere direkt, benachbarten Grundlagerungsabschnitte einen wenigstens im Wesentlichen gleichen oder nur geringfügig unterschiedlichen Grundlagerabstand, insbesondere zu den benachbarten Grundlagerungsabschnitten, auf, um die Belastung aus der Unwucht möglichst gleichmäßig auf alle Grundlager zu verteilen.

Um einen optimierten Momentenausgleich bei gleichzeitig verringerter Baugröße entlang der Längsachse zu ermöglichen, ist gemäß einer Ausführung eine Form und/oder eine Anordnung des kröpfungsfernen Gegengewichts hinsichtlich einer Radialrichtung und/oder hinsichtlich einer Umfangsrichtung der Kurbelwelle auf ein Gegengewicht abgestimmt, das an der den Kröpfungen zugewandten längsaxialen Seite des äußeren Grundlagerungsabschnittes angeordnet ist.

Insbesondere kann mithilfe simulierender Berechnungsmethoden, beispielsweise mittels eines CAE-/CAD-Programms, ermittelt werden, wie das steuerabtriebsseitige äußere Gegengewicht bei einer herkömmlichen Kurbelwelle auf eine zumindest längsaxial verkleinerte Version dieses Gegengewichtes und ein kröpfungsfernes Gegengewicht aufgeteilt werden kann.

Beispielsweise kann ein herkömmliches, ohne Kenntnis der Erfindung breiter ausgeführtes äußeres Gegengewicht mit Kenntnis der Erfindung gemäß einer Ausführung ersetzt werden, wobei das kröpfungsferne Gegengewicht dem benachbarten Gegengewicht insbesondere bezüglich seiner Kontur bezüglich einer zur Längsachse rechtwinkligen Ebene wenigstens im Wesentlichen nachgeformt ist.

Um dem Ziel einer gleichmäßigen Beabstandung der Grundlager näher zu kommen, kann dabei gemäß einer Ausführung das zu dem kröpfungsfernen Gegengewicht benachbarte Gegengewicht wenigstens im Wesentlichen die gleiche längsaxiale Erstreckung wie die anderen, zwischen den beiden äußeren Grundlagerungsabschnitten angeordneten, Gegengewichte aufweisen.

Als besonders wichtig erweist sich ein derartiger Momentenausgleich bei bestimmten Motorbauformen, weshalb gemäß einer Ausführung die Kurbelwelle eine Cross-plane-Bauart aufweist.

Der Verbrennungsmotor ist gemäß unterschiedlicher Ausführungen ausgebildet als V8-Crossplane-, V8-Flatplane oder V10-Motor.

Weitere Merkmale, Vorteile und Anwendungsmöglichkeiten der Erfindung ergeben sich aus der nachfolgenden Beschreibung im Zusammenhang mit den Figuren. Es zeigen:
- Fig. 1: einen Verbrennungsmotor mit einem Kurbeltrieb nach einer bekannten Ausführung in einer schematischen Schnittansicht; und
- Fig. 2: einen Verbrennungsmotor mit einem Kurbeltrieb nach einer beispielhaften Ausführung der Erfindung in einer schematischen Schnittansicht.

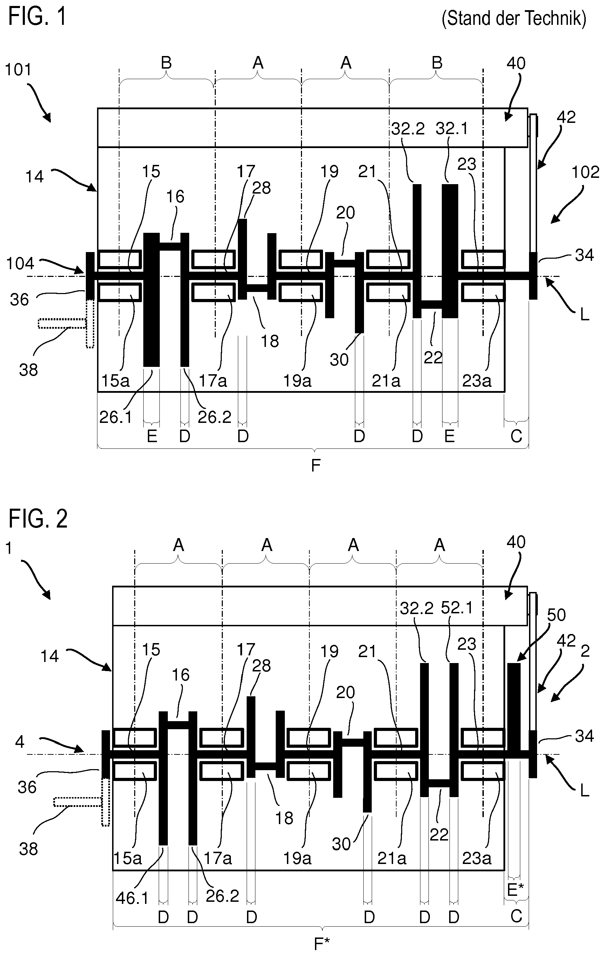

In Fig. 1 ist ein als V8-Motor ausgebildeter Verbrennungsmotor 101 mit einem bekannten Kurbeltrieb 102 nach einer im Stand der Technik bekannten Ausführung mit einer gängigen Kurbelwelle 104 gezeigt. Die bekannte Kurbelwelle 104 ist als Kreuzwelle (Kurbelwelle in Cross-Plane-Bauweise) ausgebildet und weist vier Kröpfungen 16, 18, 20 und 22 auf, deren Hubzapfen beabstandet von einer Mittellängsachse L der Kurbelwelle 104 angeordnet sind.

Zur Lagerung der Kurbelwelle 104 an einem Gehäuse 14 des Verbrennungsmotors 101 sind - längsaxial beiderseits jeder der Kröpfungen 16, 18, 20 und 22 - Grundlagerungsabschnitte 15, 17, 19, 21 und 23 an der Kurbelwelle 104 ausgebildet, an welchen jeweils ein Grundlager 15a, 17a, 19a, 21a bzw. 23a angeordnet ist, das sich an dem Gehäuse 14 abstützt.

Bei der bekannten Ausführung gemäß Fig. 1 weisen die inneren Kröpfungen 18 und 20 jeweils auf beiden Seiten des Hubzapfens ein Gegengewicht 28 bzw. 30 zum Momentenausgleich auf. Diese Gegengewichte 28 und 30 weisen jeweils eine längsaxiale Breite D auf. Die äußeren Kröpfungen 16 und 22 weisen hingegen nur auf der jeweils inneren längsaxialen Seite des Hubzapfens ein Gegengewicht 26.2 bzw. 32.2 mit einer längsaxialen Breite D auf.

An der äußeren längsaxialen Seite des Hubzapfens der äußeren Kröpfungen 16 und 22 ist jeweils ein schwereres, und damit wegen des begrenzten radialen Bauraums breiteres Gegengewicht 26.1 bzw. 32.1 der größeren Breite E (größer als die Breite D) angeordnet, welches nötig ist, um den Momentenausgleich in einem ausreichenden Umfang zu ermöglichen.

Wegen der breiteren Gegengewichte 26.1 bzw. 32.1 mit der größeren Breite E ist es in dieser bekannten Ausführung nicht möglich, alle Grundlagerungsabschnitte 15, 17, 19, 21 und 23 mit einem gleichen Abstand zu den jeweilig benachbarten Grundlagerungsabschnitten anzuordnen. Stattdessen sind die inneren Grundlager 17a, 19a und 21a jeweils in einem Abstand A zueinander verbaut. Die äußeren Grundlager 15a und 23a sind hingegen zum jeweils benachbarten inneren Grundlager 17a bzw. 21a in einem größeren Abstand B (größer als der Abstand A) verbaut. Dadurch sind im Betrieb des Verbrennungsmotors 101 insbesondere die inneren Grundlager 17a und 21a starken Belastungen, u.a. durch die Unwucht der Kurbelwelle 104, ausgesetzt.

Die Kurbelwelle weist an ihrem einen längsaxialen Ende einen Steuerabtrieb 34 und an ihrem anderen, steuerabtriebfernen Ende einen Wellenabschluss 36 auf, welcher in dieser bekannten Ausführung (und typischerweise bei längs eingebauten V-Motoren) einen Antriebsabtrieb aufweist, an welchen der symbolisch dargestellte Antriebsstrang 38 angeschlossen ist.

Der Steuerabtrieb 34 ist in einem Abstand C von dem äußeren Grundlager 23a angeordnet. Dieser Abstand C ergibt sich aus der geometrischen Ausgestaltung eines Zylinderkopfes 40 des Motors 101, der längsaxial über die Grenze des Motorgehäuses 14 hinaus übersteht, insbesondere um hydraulische Komponenten und Leitungen, beispielsweise zur Ansteuerung der Hydrostößel, beherbergen zu können. Dementsprechend ist die Anbindung eines als Kettentrieb ausgebildeten Endloszugmittels 42 lediglich in einem Abstand von mindestens C von dem Lager 23a möglich.

In dieser bekannten Konfiguration weist der Verbrennungsmotor 101 wegen der teilweise größeren Abstände B zwischen den erwähnten Grundlagern eine vergleichsweise große längsaxiale Erstreckung F auf.

In Fig. 2 ist ein als V8-Motor ausgebildeter Verbrennungsmotor 1 mit einem Kurbeltrieb 2 mit einer Kurbelwelle 4 nach einer beispielhaften Ausführung der Erfindung gezeigt.

Anders als bei der bekannten Kurbelwelle 104 aus Fig. 1 sind bei der in Fig. 2 dargestellten Kurbelwelle 4 alle Grundlagerungsabschnitte 15, 17, 19, 21 und 23 zu den jeweils benachbarten Grundlagerungsabschnitten im Abstand A verbaut.

Dies ist möglich, weil an den äußeren Kröpfungen 16 und 22 - anders als Fig. 1 - auch die äußeren Gegengewichte 46.1 und 52.1 lediglich die Breite D der anderen Gegengewichte aufweisen. Um dennoch einen ausreichenden Momentenausgleich zu ermöglichen, ist in dem Bereich des, insbesondere ohnehin unumgehbaren, Abstandes C ein kröpfungsfernes Gegengewicht 50 angeordnet, welches eine Breite E*aufweist, die insbesondere größer als die Breite D ist.

Mit dieser beispielhaften Ausführung eines erfindungsgemäßen Verbrennungsmotors 1 kann dieser mit einer längsaxialen Erstreckung F* ausgelegt werden, die kleiner ist als die längsaxiale Erstreckung F des bis auf die Anwendung einer Ausführung der Erfindung vergleichbaren, bekannten Verbrennungsmotors 101 gemäß Fig. 1.

### BEZUGSZEICHENLISTE

- 1: Verbrennungsmotor
- 2: Kurbeltrieb
- 4: Kurbelwelle
- 14: Motorgehäuse
- 15, 23: äußere Grundlagerungsabschnitte
- 15a, 23a: äußere Grundlager
- 17, 19, 21: innere Grundlagerungsabschnitte
- 17a, 19a, 21a: innere Grundlager
- 16, 22: äußere Kröpfungen
- 18, 20: innere Kröpfungen
- 26, 28, 30, 32: Gegengewichte
- 34: Steuerabtrieb
- 36: Antriebsabtrieb
- 38: Antriebsstrang
- 40: Zylinderkopf
- 42: Endloszugmittel
- 46.1, 52.1: äußere Gegengewichte
- 50: kröpfungsfernes Gegengewicht
- 101: bekannter Verbrennungsmotor
- 102: bekannter Kurbeltrieb
- 104: bekannte Kurbelwelle
- A: kleinerer Lagerabstand
- B: größerer Lagerabstand
- C: Abstand zwischen äußerem Grundlager und Steuerabtrieb
- D: kleinere Gegengewichtbreite
- E: größere Gegengewichtbreite
- E*: Breite des kröpfungsfernen Gegengewichts
- F: größere Längserstreckung eines bekannten Verbrennungsmotors
- F*: kleinere Längserstreckung des Verbrennungsmotors
- L: Mittellängsachse des Verbrennungsmotors

## Patentansprüche

1. **Kurbelwelle** (4) für einen Verbrennungsmotor (1) eines Kraftfahrzeugs, aufweisend:
- eine Mittellängsachse (L), entlang der sich die Kurbelwelle (4) zwischen einem Steuerabtrieb (34) und einem steuerabtriebsfernen Wellenabschluss (36) erstreckt,
- mehrere Kröpfungen (16, 18, 20, 22) zur Aufnahme jeweils wenigstens einer Pleuelstange,
- mehrere Grundlagerungsabschnitte (15, 17, 19, 21, 23) zum Lagern der Kurbelwelle (4) am Motorgehäuse (14), wobei auf beiden längsaxialen Seiten jeder Kröpfung (16, 18, 20, 22) ein Grundlagerungsabschnitt (15, 17, 19, 21, 23) angeordnet ist, sodass zwei äußere Grundlagerungsabschnitte (15, 23) und wenigstens ein innerer Grundlagerungsabschnitt (17, 19, 21) vorgesehen sind,
wobei an wenigstens einem Teil der Kröpfungen (16, 18, 20, 22) jeweils ein Gegengewicht (26, 28, 30, 32) zum Ausgleich von Momenten aus dem Betrieb des Verbrennungsmotors angeordnet ist,
wobei längsaxial zwischen dem Steuerabtrieb (34) und dem steuerabtriebsnahen äußeren Grundlagerungsabschnitt (23) ein kröpfungsfernes Gegengewicht (50) angeordnet ist, und
**dadurch gekennzeichnet, dass** die Kurbelwelle (4) zwischen dem steuerabtriebsfernen Grundlagerungsabschnitt (15) und dem steuerabtriebsfernen Wellenabschluss (36) mit einem Schwerpunkt ausgebildet ist, der zumindest im Wesentlichen an der Mittellängsachse (L) angeordnet ist.

2. Kurbelwelle (4) gemäß Anspruch 1, **wobei** zwischen dem steuerabtriebsfernen Wellenabschluss (36) und dem steuerabtriebsfernen Grundlagerungsabschnitt (15) kein kröpfungsfernes Gegengewicht angeordnet ist.

3. Kurbelwelle gemäß einem der vorherigen Ansprüche, **wobei** ein steuerabtriebsnäheres Gegengewicht (52.1) der steuerabtriebsnahen Kröpfung (22) und ein steuerabtriebsferneres Gegengewicht (46.1) der steuerabtriebsfernen Kröpfung (16) zumindest im Wesentlichen die gleiche längsaxiale Erstreckung (D) aufweisen.

4. Kurbelwelle (4) gemäß einem der vorherigen Ansprüche, **wobei** alle zwischen den beiden äußeren Grundlagerungsabschnitten (15, 23) angeordneten Gegengewichte (26, 28, 30, 32) zumindest im Wesentlichen die gleiche längsaxiale Erstreckung (D) aufweisen.

5. Kurbelwelle (4) gemäß einem der vorherigen Ansprüche, **wobei** alle benachbarten Grundlagerungsabschnitte (15, 17, 19, 21, 23) einen wenigstens im Wesentlichen gleichen Grundlagerabstand (A) aufweisen.

6. Kurbelwelle (4) gemäß einem der vorherigen Ansprüche, **wobei** eine Form und/oder eine Anordnung des kröpfungsfernen Gegengewichts (50) hinsichtlich einer Radialrichtung und/oder hinsichtlich einer Umfangsrichtung der Kurbelwelle (4) auf ein Gegengewicht (52.1) abgestimmt ist, das an der den Kröpfungen zugewandten längsaxialen Seite dieses äußeren Grundlagerungsabschnittes (23) angeordnet ist.

7. Kurbelwelle (4) gemäß Anspruch 6, **wobei** das kröpfungsferne Gegengewicht (50) dem benachbarten Gegengewicht (52.1) insbesondere bezüglich seiner Kontur bezüglich einer zur Längsachse (L) rechtwinkligen Ebene wenigstens im Wesentlichen nachgeformt ist.

8. Kurbelwelle (4) gemäß einem der vorherigen Ansprüche, **wobei** die Kurbelwelle (4) eine Crossplane-Bauart aufweist.

9. **Kurbeltrieb** (2), **aufweisend** eine Kurbelwelle (4) gemäß einem der vorherigen Ansprüche und ein Endloszugmittel (42), insbesondere einen Kettentrieb.

10. **Verbrennungsmotor** (1) für ein Kraftfahrzeug, **aufweisend** einen Kurbeltrieb (2) gemäß Anspruch 9 sowie eine der Anzahl der Grundlagerabschnitte (15, 17, 19, 21, 23) entsprechende Anzahl von Grundlagern (15a, 17a, 19a, 21a, 23a), mittels welchen die Kurbelwelle (4) des Kurbeltriebs (2) an einem Motorgehäuse (14), gegebenenfalls mittelbar, gelagert ist.

11. Verbrennungsmotor (1) gemäß Anspruch 10, **ausgebildet** als V8-Cross-plane oder V10-Motor.

## Claims

1. **A crankshaft** (4) for an internal combustion engine (1) of a motor vehicle, having:
- a longitudinal central axis (L), along which the crankshaft (4) extends between a control output (34) and a shaft end (36) remote from the control output,
- a plurality of offsets (16, 18, 20, 22) for accommodating at least one connecting rod in each case,
- a plurality of main bearing portions (15, 17, 19, 21, 23) for mounting the crankshaft (4) on the engine case (14), wherein one main bearing portion (15, 17, 19, 21, 23) is arranged on both longitudinal-axial sides of each offset (16, 18, 20, 22), so that two outer main bearing portions (15, 23) and at least one inner main bearing portion (17, 19, 21) are provided,
wherein in each case a counterweight (26, 28, 30, 32) for compensating for moments arising from the operation of the internal combustion engine is arranged on at least some of the offsets (16, 18, 20, 22),
wherein a counterweight (50) remote from the offset is arranged longitudinal-axially between the control output (34) and the outer main bearing portion (23) near to the control output, and
**characterised in that** the crankshaft (4) between the main bearing portion (15) remote from the control output and the shaft end (36) remote from the control output is formed with a centre of gravity which is arranged at least substantially on the longitudinal central axis (L).

2. A crankshaft (4) according to Claim 1, **wherein** no counterweight remote from the offset is arranged between the shaft end (36) remote from the control output and the main bearing portion (15) remote from the control output.

3. A crankshaft according to one of the preceding claims, **wherein** a counterweight (52.1), nearer to the control output, of the offset (22) near to the control output and a counterweight (46.1), more remote from the control output, of the offset (16) remote from the control output have at least substantially the same longitudinal-axial extent (D).

4. A crankshaft (4) according to one of the preceding claims, **wherein** all the counterweights (26, 28, 30, 32) arranged between the two outer main bearing portions (15, 23) have at least substantially the same longitudinal-axial extent (D).

5. A crankshaft (4) according to one of the preceding claims, **wherein** all the adjacent main bearing portions (15, 17, 19, 21, 23) have an at least substantially identical main bearing spacing (A).

6. A crankshaft (4) according to one of the preceding claims, **wherein** a shape and/or an arrangement of the counterweight (50) remote from the offset with regard to a radial direction and/or with regard to a peripheral direction of the crankshaft (4) is matched to a counterweight (52.1) which is arranged on the longitudinal-axial side, facing the offsets, of this outer main bearing portion (23).

7. A crankshaft (4) according to Claim 6, **wherein** the counterweight (50) remote from the offset at least substantially duplicates the adjacent counterweight (52.1) especially with respect to its contour with respect to a plane at right-angles to the longitudinal axis (L).

8. A crankshaft (4) according to one of the preceding claims, **wherein** the crankshaft (4) has a cross-plane design.

9. **A cranktrain** (2), **having** a crankshaft (4) according to one of the preceding claims and an endless traction means (42), especially a chain mechanism.

10. **An internal combustion engine** (1) for a motor vehicle, **having** a cranktrain (2) according to Claim 9 and also a number of main bearings (15a, 17a, 19a, 21a, 23a) corresponding to the number of main bearing portions (15, 17, 19, 21, 23), by means of which the crankshaft (4) of the cranktrain (2) is mounted on an engine case (14), optionally indirectly.

11. An internal combustion engine (1) according to Claim 10, **designed** as a V8 cross-plane or V10 engine.

## Revendications

1. Vilebrequin (4) destiné à un moteur à combustion interne (1) d'un véhicule comprenant :
- un axe longitudinal médian (L), le long duquel s'étend le vilebrequin (4) entre une prise de commande (34) et un embout d'arbre (36) situé à distance de la prise de commande,
- plusieurs coudures (16, 18, 20, 22) permettant chacune de recevoir au moins une bielle,
- plusieurs segments de palier de base (15, 17, 19, 21, 23) permettant le montage du vilebrequin (4) sur le carter du moteur (14), sur les deux côtés longitudinaux axiaux de chaque coudure (16, 18, 20, 22) étant installé un segment de palier de base (15, 17, 19, 21, 23.) de sorte que deux segments de palier de base externes (15, 23) et au moins un segment de palier de base interne (17, 19, 21) soient prévus,
sur au moins une partie des coudures (16, 18, 20, 22) étant respectivement installé un contrepoids (26, 28, 30, 32) permettant d'équilibrer des couples provenant du fonctionnement du moteur à combustion interne, longitudinalement et axialement entre la prise de commande (34) et le segment de palier de base externe (23) voisin de la prise de commande étant installé un contrepoids (50) situé à distance de la coudure,
**caractérisé en ce que**
le vilebrequin (4) a un centre de gravité entre le segment de palier de base (15) situé à distance de la prise de commande et l'embout d'arbre (36) situé à distance de la prise de commande qui est essentiellement situé sur l'axe longitudinal médian (L).

2. Vilebrequin (4) conforme à la revendication 1,
dans lequel entre l'embout d'arbre (36) situé à distance de la prise de commande et le segment de palier de base (15) situé à distance de la prise de commande n'est installé aucun contrepoids situé à distance de la coudure.

3. Vilebrequin conforme à l'une des revendications précédentes,
dans lequel le contrepoids (52-1) plus proche de la prise de commande de la coudure (22) proche de la prise de commande et le contrepoids (46.1) plus éloigné de la prise de commande de la coudure (16) situé à distance de la prise de commande ont au moins essentiellement la même extension longitudinale axiale (D).

4. Vilebrequin (4) conforme à l'une des revendications précédentes, dans lequel tous les contrepoids (26, 28, 30, 32) installés entre les deux segments de palier de base externes (15, 23) ont au moins essentiellement la même extension (D) en longueur axiale.

5. Vilebrequin (4) conforme à l'une des revendications précédentes, dans lequel tous les segments de palier de base voisins (15, 17, 19, 21, 23) sont essentiellement à une même distance de palier de base (A).

6. Vilebrequin (4) conforme à l'une des revendications précédentes, dans lequel la forme et/ou l'agencement du contrepoids (50) situé à distance de la coudure est(sont) adapté(s) dans la direction radiale et/ou dans la direction périphérique du vilebrequin (4) au contrepoids (52.1) qui est installé sur le côté longitudinal axial tourné vers les coudures du segment de palier de base externe (23).

7. Vilebrequin (4) conforme à la revendication 6,
dans lequel le contrepoids (50) situé à distance de la coudure est au moins essentiellement formé conformément au contrepoids voisin (52.1) en particulier concernant son contour dans un plan perpendiculaire à l'axe longitudinal (L).

8. Vilebrequin (4) conforme à l'une des revendications précédentes,
de type à plans croisés.

9. Mécanisme de vilebrequin (2) comprenant un vilebrequin (4) conforme à l'une des revendications précédentes, et des moyens de traction sans fin (42), en particulier un entraînement par chaîne.

10. Moteur à combustion interne (1) destiné à un véhicule automobile comprenant un mécanisme de vilebrequin (2) conforme à la revendication 9 ainsi qu'un nombre de paliers de base (15a, 17a, 19a, 21a, 23a) correspondant au nombre de segments de palier de base (15, 17, 19, 21, 23) au moyen desquels le vilebrequin (4) du mécanisme du vilebrequin (2) est monté sur un carter de moteur (14), le cas échéant indirectement.

11. Moteur à combustion interne (1) conforme à la revendication 10, réalisé sous la forme d'un moteur à plans croisés V8 ou d'un moteur V10.
